# EUROPEAN PATENT SPECIFICATION

(11) **EP 1 465 446 B1**
(45) Date of publication and mention of the grant of the patent: **03.08.2005**
(21) Application number: 03290825.3
(22) Date of filing: 02.04.2003
(51) Int. Cl.: H04Q 7/34

(54) **Automatic service outage reporting in a mobile communications network**
Automatische Meldung eines Dienstausfalls in einem Mobilkommunikationsnetz
Reportage automatique d'interruption de service dans un réseau de communication mobile

(43) Date of publication of application: 06.10.2004
(73) Proprietor: Orange S.A., 75505 Paris Cédex 15 (FR)
(72) Inventor: Strassmann, Steven Henry, Brookline MA 02446 (US)
(74) Representative: DeVile, Jonathan Mark, Dr.

(56) References cited:
- US-A- 5 307 510
- US-A1- 2001 016 489
- US-A1- 2002 155 816
- GARDNER E: "Automated outage reporting: operational response or customer service?" RURAL ELECTRIC POWER CONFERENCE, 1994. PAPERS PRESENTED AT THE 38TH ANNUAL CONFERENCE COLORADO SPRINGS, CO, USA 24-26 APRIL 1994, NEW YORK, NY, USA,IEEE, 24 April 1994 (1994-04-24), pages D1-1-D111, XP010118217 ISBN: 0-7803-1447-6

## Description

### Field of the Invention

The present invention relates to telecommunications apparatus operable to provide outage information for a mobile network.

### Background of the Invention

Outage is a term, which is used to describe a loss or impairment of services or facilities as a result for example or a fault or temporary disablement of a system, which would otherwise provide such services. For example, outage is used to describe a loss of electrical power to a home or section of a city.

Mobile telecommunications radio networks provide a facility for communicating via a radio access interface within a radio coverage area provided by the network. To provide the radio coverage area, the mobile radio telecommunications network includes an arrangement of base stations which are inter-connected via a back-bone network and which provide a facility for communicating with mobile terminals within a radio coverage area associated with each base station. The radio coverage area associated with each base station is known as a cell. The cells of the network are arranged such that substantially continuous communications can be provided to the mobile terminals as the mobile terminals move within the radio coverage area provided by the cells of the network.

Call centres are known to provide a facility for disseminating information to customers or users of a particular service. Typically, the call centres provide a facility through which a user may be connected to an operator in order to present a query or gain information for some reason, depending upon the nature of the service provided. For example, if an outage occurs in a mobile network, then mobile terminal users will experience a loss of communications in a part or parts of the network which are effected by the outage. If a user wishes to inquire as to the reason for the outage, the user may call a call centre associated with the mobile network, thus increasing a load on the call centre as a result of the outage.

US 2001/0016489 A1 discloses a system for monitoring and reporting regions of a mobile network with high error rates and/or dead zones. Mobile stations are arranged to monitor an error rate experienced during data communications and provide error messages reporting the error rate in combination with an indication of a geographical location where the error rate was experienced. A database is constantly updated with the error messages. A network management station is arranged to analyse the error messages to identify recurring error trends which indicate regions that are "dead zones" and/or combinations of locations and times during which error rates are high. If the user enters a known dead zone then the system controller may inform a user of appropriate steps to take in order to maintain a connection.

### Summary of Invention

According to the present invention there is provided a telecommunications apparatus operable to provide outage information associated with a mobile network to mobile terminals. The telecommunications apparatus comprises an outage monitoring processor operable to receive data indicative of a loss of service experienced by a mobile terminal. The loss of service data includes data indicative of a geographical area where the loss of service was experienced. The telecommunications apparatus includes an outage data store for storing data representing outage information indicating a geographical area where communication services may be degraded causing at least a partial loss of service to the mobile terminals and an explanation for the loss of service. The monitoring processor is operable to compare the geographical area provided with the loss of service data experienced by the mobile terminal with the geographical area associated with outage information. From the comparison of the geographical areas, the monitoring processor is operable to recover the data indicating the explanation for the loss of service from the data store and to communicate data representing the explanation to the mobile terminal.

As a mobile network is deployed, a coverage area within which communications via the network are possible increases. However, there may be areas where communications via the network are not yet possible as a result of the pending deployment of the network thereby causing a discontinuity in the coverage area provided by the mobile network. Similarly, where the network has been deployed there may be a temporary outage of the mobile network as a result of maintenance work, for example, being performed on base stations of the mobile network. For these examples, it will be understood that the loss of services to mobile terminals resulting from the outage is both inconvenient and possibly vexatious to users, which may result in a substantial loss of goodwill to the operator of the mobile network.

Embodiments of the present invention provide an arrangement for communicating a reason for an outage to a mobile terminal automatically in a situation where the outage is predetermined. The outage may be predetermined, for example as a result of a pending deployment of a mobile network or through a temporary outage due to maintenance work being conducted on one or more of the base stations of the network. As such, since this information is communicated to the mobile terminal automatically then there will be no requirement for the user to call the service centre to gain access to this information. Accordingly a load on the call centre will be correspondingly reduced.

According to an aspect of the present invention there is provided a processing apparatus for controlling affiliation of mobile terminals with base stations in a mobile radio network. The apparatus comprises a loss of service monitor operable to detect at least a partial loss of service experienced by a mobile terminal, and upon the loss of service being detected, to generate loss of service data including data identifying one of the base stations with which the mobile terminal was affiliated when the loss of service was detected. For example, the loss of service data may be provided in response to a lost call to the mobile terminal. The data indicative of the geographical area of the mobile terminal associated with the loss of service is provided from a base station of the mobile network, which was last to communicate with the mobile terminal before the call was dropped. The processing apparatus is therefore arranged to generate loss of service data for the monitoring processor from which an explanation for the loss of service can be generated and reported to mobile terminals.

Various further aspects and features of the present inventions are defined in the appended claims.

### Brief Description of the Drawings

Embodiments of the present invention will now be described by way of example only with reference to the accompanying drawings where like parts are provided with corresponding reference numerals and in which:
Figure 1 is a schematic block diagram of a mobile radio network in accordance with the GSM standard, including a telecommunications apparatus forming part of a call centre;
Figure 2 is a schematic block diagram of the call centre shown in Figure 1;
Figure 3 is a schematic block diagram of the telecommunications apparatus shown in Figure 2;
Figure 4 is a schematic block diagram of a mobile terminal displaying call back time options;
Figure 5 is a schematic block diagram of a mobile terminal displaying an indication of an expired time before call back;
Figure 6 is a schematic block diagram of a mobile terminal displaying an indication of a call back time to go;
Figure 7 is a flow diagram illustrating the operation of the telecommunications apparatus appearing in Figure 3;
Figure 8 is a schematic block diagram of a mobile terminal displaying an available calling credit to a user;
Figure 9 is a schematic block diagram of a mobile radio network corresponding to the GSM standard, including a telecommunications apparatus forming part of an operator service centre;
Figure 10 is a schematic block diagram of a mobile terminal and a base station illustrating a process for displaying a remaining call credit value;
Figure 11 is a schematic block diagram of a mobile terminal and a base station illustrating a further process for displaying a remaining call credit value;
Figure 12 is a schematic block diagram of an example of a mobile terminal displaying an available calling credit to a user in the form of a "fuel gauge";
Figure 13 is a schematic block diagram of a mobile terminal displaying an available calling credit to a user in the form of a pie-chart;
Figure 14 is a schematic block diagram of a mobile radio network in accordance with the GSM standard, including a telecommunications apparatus having an outage monitoring processor;
Figure 15 is a block diagram of part of the mobile network of Figure 14, illustrating an example of outage of the mobile network;
Figure 16 is a block diagram of part of the mobile network of Figure 14, illustrating a further example of outage of the mobile network;
Figure 17 is a part schematic block diagram, part flow diagram illustrating the operation of the telecommunications apparatus shown in Figure 14, generating outage information in response to a loss of service; and
Figure 18 is a schematic block diagram a mobile terminal displaying outage information.

### Description of the Example Embodiments

Embodiments of the present invention will be described with reference to operator services provided as part of a mobile radio network. However it will be appreciated that embodiments of the present invention are not limited to a mobile radio network and may be applicable to other types of telecommunications networks both fixed and mobile.

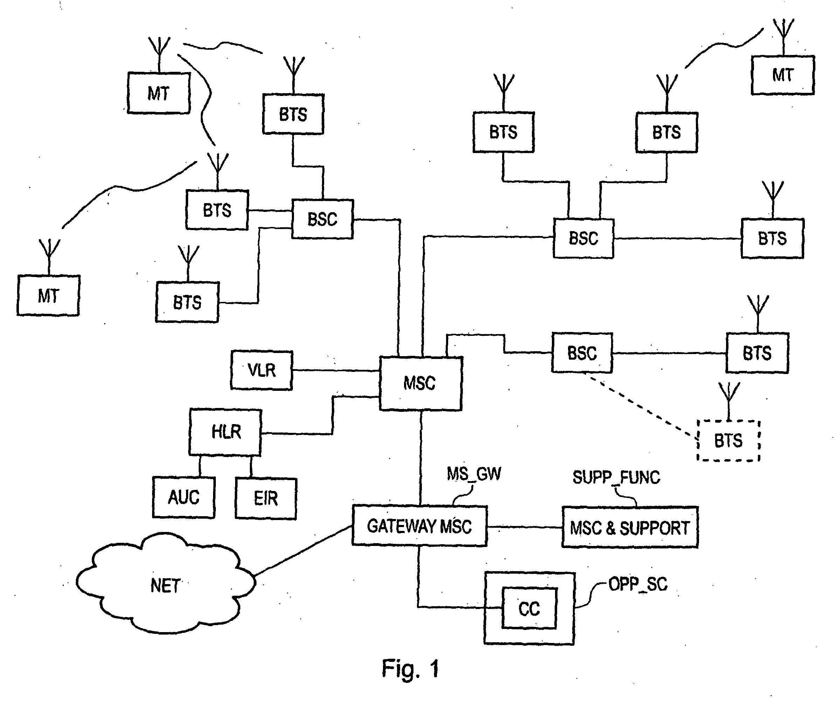

Figure 1 provides an example schematic block diagram of a mobile radio network corresponding to the Global System for Mobiles (GSM) standard. In Figure 1 a mobile switching centre MSC is arranged to be connected to a plurality of base station controllers BSC. Each of the base station controllers BSC are connected to a plurality of base transceiver stations BTS. The base transceiver stations BTS and the base station controller BSC to which they are connected form a base station sub-system. Data is communicated via an air interface in accordance with the GSM standard between mobile terminals MT and one of the base transceiver station BTS with which the mobile terminal is affiliated via radio signals. Therefore whilst a mobile terminal is within a coverage area provided by a base transceiver station, radio communications are provided with that base transceiver station via which data can be transmitted and received. In the remainder of this description the base transceiver stations BTS will be referred to as base stations for brevity.

Also forming part of the GSM network shown in Figure 1 is a visitor location register VLR which maintains a current location of each of the mobile terminals within the network. The VLR provides an indication of which of the base stations or group of base stations a mobile terminal may be currently affiliated. The GSM network also includes a home location register HLR which stores information specific to each subscriber to the network. The home location register HLR has an equipment identity register to provide a facility through which a network operator may track stolen or malfunctioning terminals. The home location register HLR also includes an authentication centre AUC which is used to store information that is associated with security features provided by the network.

The mobile switching centre MSC is connected to a gateway MSC MSC_GW which provides a facility for connecting the mobile switching centre MSC to other telecommunications networks which may include a public switched telephone network or the world-wide web NET. An MSC support function SUPP_FUNC is also connected to the gateway MSC MSC_GW. More details on the GSM network may be found in the publication entitled "GSM, CDMA1 and 3G systems" by R. Steel ET AL published by Willie ISBN 0471491853.

One embodiment of the present invention will now be described. As shown in Figure 1, connected to the gateway MSC MSC_GW is an operator service centre OPP_SC. The operator service centre OPP_SC may include a call centre CC, which provides a facility for users to access operator services. In other embodiments the call centre CC may be separate from the operator service centre OPP_SC, and may be connected to a communications network which is not associated with the service for which the call centre functions to receive enquires for that service.

The call centre CC may be accessed via the GSM network or indeed via another network via the gateway MSC MSC_GW. The call centre CC provides a facility for connecting user terminals to operator terminals which may provide access to a human operator thereby providing a facility for a user to present a query verbally. Alternatively, the operator terminals provided in the call centre CC may include automated response equipment, or devices providing communications via other forms of media such as text or through the world-wide web as part of an Internet website.

### Call Centre Call Back

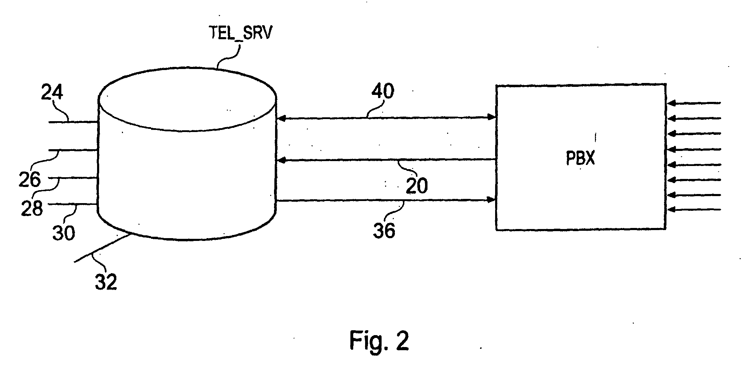

Figure 2 provides a schematic block diagram of the call centre CC forming part of the operator service centre OPP_SC shown in Figure 1 according to an example embodiment of the present invention. In Figure 2, a private branch exchange PBX provides service lines 20 to a telecommunications server TEL_SRV for providing call processing functions according to an embodiment of the invention. The telecommunications server TEL_SRV provides a facility for connecting operator terminals connected to channels 24, 26, 28, 30, 32 to calls from user terminals connected to the service lines 20 by the private branch exchange PBX.

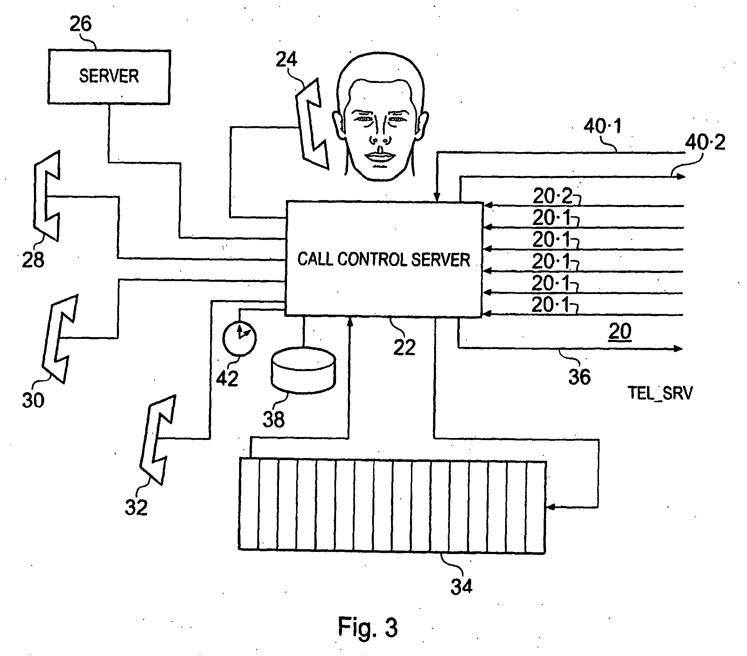

The telecommunications server TEL_SRV is shown in more detail in Figure 3. The telecommunications server shown in Figure 3 includes a call control server 22. The call control server 22 provides a facility for connecting calls from the PBX to operator terminals 24, 26, 28, 30, 32. The operator terminals may comprise communicator sets 24 through which human operators may service a call or may include a server 26 which is operable to provide an interactive communications responses and may form part of a website. Other operator terminals 28, 30 and 32 may include a facility for providing an automated audio response when a user terminal is connected via the call control server or may be operator communicator sets providing a connection to a human operator through which an enquiry can be made.

The call centre CC includes a queuing processor 34 forming a pipeline or First In First Out (FIFO) buffer through which calls may be queued. The queuing of calls may be required if a call is received through one of the connecting channels 20 but there is no operator terminal available to service this call. If so, then the call may be placed in a queue formed by the buffer 34 until an operator is available to service the call.

The call control server 22 may estimate a mean waiting time before a call held in the queuing buffer 34 may be serviced by an operator terminal. The mean waiting time may be estimated from a rate of serving calls received by operator terminals in combination with the number of waiting calls determined from the state of the queuing buffer 34.

The example embodiment shown in Figure 3 is arranged to make the number of calls received at the call control server 22 more predictable so that calls may be handled in a more efficient way. The example embodiment provides an advantage by reducing a likelihood of users' calls having to wait unproductively in the queuing buffer 34 to be serviced. To this end, the call control server 22 is arranged to estimate the mean waiting time for a call placed in the queuing buffer 34 to be serviced. As mentioned above this is determined from a mean service time of each call in combination with the number of calls present in the queuing buffer 34. Accordingly, multiplying the mean service time by the number of waiting calls ahead of the call concerned provides an estimation of the call waiting time.

In operation the call control server 22 estimates at least one time when it is likely that an operator would be free to service the call from a user terminal. This time is then communicated back to the user terminal. The time when an operator terminal may be free to service a user terminal may be communicated to the user via an audio communication or may be provided by a text message if the mobile communications network provides a facility for data communications as is the case for the GSM network.

If a user wishes to accept a call back time then an acceptance signal is provided by the user, for example by touch-tone dialling or voice recognition processing, or for the case of a text message a data communication which is received via the PBX at the call control server. To this end, to communicate the call back time and receive an indication of acceptance, data channels 40 are provided. A further control channel 36 between the control server 22 and the PBX is provided in order to control the arrangement of calls between the PBX and the call control server.

Once the call control server 22 has received an acceptance of the call back time then the call from the user terminal concerned can be cleared pending call back at the pre-arranged time. Thus, the user is free to perform some other productive activity rather than waiting in the queue for the call to be serviced.

The call control server 22 may further provide a plurality of optional call back times to the user thereby providing the user with greater freedom to select a call back time, which is most appropriate. The call back time may be calculated in accordance with the mean time to service a call with the effect that the call back times make most efficient use of the available operator terminals within the service centre. Furthermore since calls to be serviced (the load) are made more predictable, a number of operators can be scheduled to optimise the service of calls at call back times.

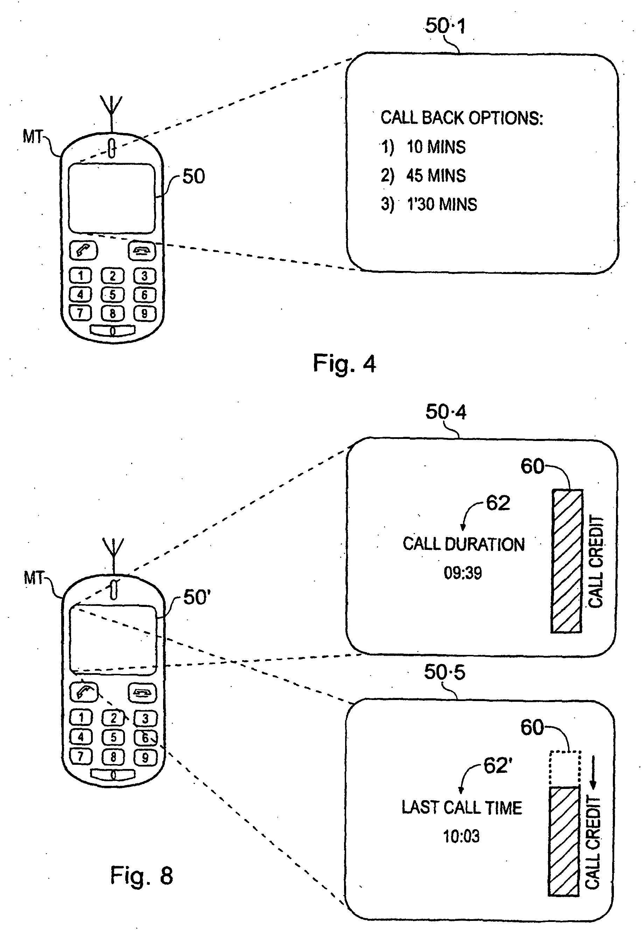

As illustrated in Figure 4 a mobile terminal MT is shown with a graphical display 50. The display 50 is shown in expanded form 50.1 to illustrate the call back time options communicated from the call control server 22 to the user terminal MT. Thus in accordance with this data communicated as text the user may respond giving an indication of one of the options "1", "2" or "3" which the user would prefer. Since the subscriber identity number or caller line identity number can be identified by the PBX, the call control service 22 can identify the calling user terminal in association with the selected call back time. To the end, in preferred embodiments the control server 22 includes a data store 38 for storing call back times which have been selected, in combination with the number of the mobile terminal which should be called at that time.

To arrange the call back, the call control server 22 may include a timer 42 for providing a real time reference to the call control server 22. The call control server compares the time provided by the timer 42 with the data stored in the data store 38 representing the call back time. When the call back time is equal to or passes that indicated by the timer 38, then the call control server 22 arranges for a call to be placed. The call control server 22 connects an operator terminal with the user terminal identified by the subscriber identity number or caller line identity number, which has also been stored in the data store 38. Alternatively, the call back time may be represented as a lapsed time (time from acceptance) as shown in Figure 4, the call control server timing the call back from the timer 42 with respect to the time from accepting the call.

One technique for identifying an operator terminal that can service a call back call to a user terminal is for the call control server 22 to monitor the current utilisation of the operator terminals. If an operator terminal is available then the call control server will arrange for the free operator terminal to be connected to the user terminal requiring call back. If however all operator terminals are occupied at the time that call back should occur, then the call control server reserves the next operator terminal to become free to be connected to the user terminal for call back. As such, an operator terminal does not have to be reserved for call back duty only, although call back may not occur exactly at the appointed call back time. Therefore the call control server 22 arranges particular call back times from the operator terminals which may be productively employed until one of them is selected around the call back time when one of the operator terminals becomes free.

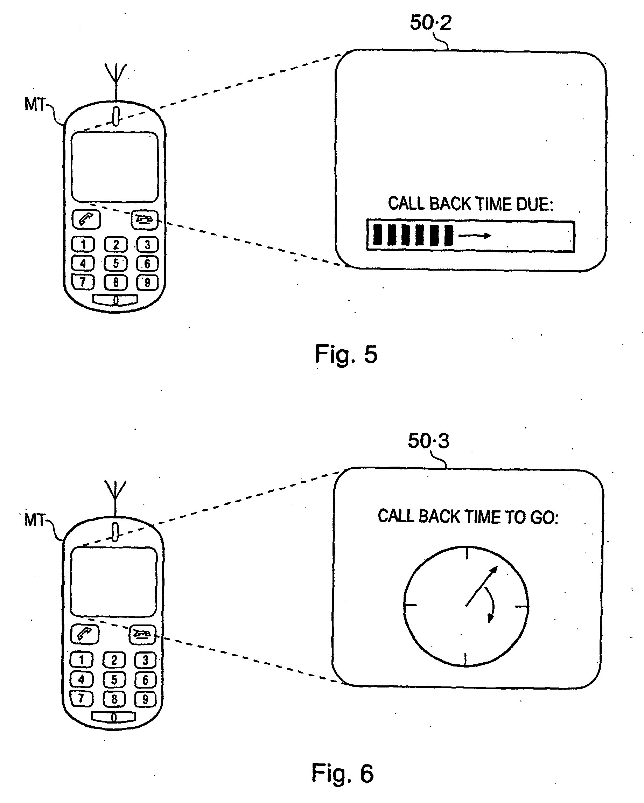

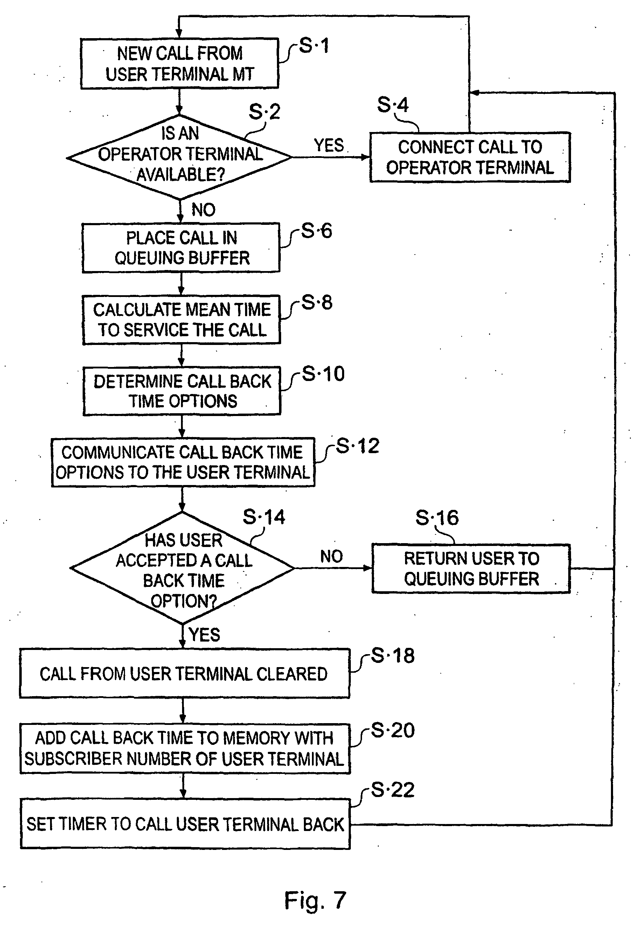

Further example techniques for providing a display of a selected call back time to the user are illustrated in Figures 6 and 7. So called smart 'phones such as for example the Orange SPV™ provide a facility for running applet programs which can deliver more user inter-active services. As such, for example, the applets can be used to both display call-back option times on a graphical user interface and provide the user with a facility for selecting one of the call-back times using the interface. Furthermore, the user can be provided with a graphical illustration of a time until call back time is due as illustrated in Figure 6 on an example graphical user display screen 50.2. A further illustration is provided in Figure 7, which shows a graphical display screen 50.3 providing a clock face of an amount of time to go before call back.

### Summary of Operation of Call Back

Figure 7 provides an example flow diagram summarising the operation of the call back control server in combination with the queuing buffer shown in Figure 3. The steps of the flow diagram shown in Figure 7 are summarised as follows:
S1: A new call is received by the PBX at the call control server via one of the service lines 20.2.
S2: The call control server determines whether an operator terminal is available.
S4: If an operator terminal is available, then the user terminal MT is connected to an operator terminal and processing proceeds to step S1.
S6: If an operator terminal is not available to service the call from the user terminal, then the call is placed in the queuing buffer 34.
S8: The call control server 22 then estimates a mean time to service the call from the state of the queuing buffer 34 and a mean service time of calls to the operator terminals.
S10: From the estimated time to service the call placed in the queuing buffer 34 the call control server 22 calculates a plurality of call back times.
S12: The call back time options are communicated to the user terminal as selectable options. The communication may be in the form of an audio communication, with a set of menu options selectable via a touch-tone or other audio or non-audio communication. Alternatively, the options may be communicated as a text message as illustrated in Figure 4. The communication may be effected via the separate communication channels 40 provided for this purpose between the call control server 22 and the PBX.
S14: The call control server then receives via the communications channels 40 an indication as to whether the user has accepted a call back time.
S16: If the user has not accepted a call back option then the call is returned to the queuing buffer pending servicing by an operator terminal.
S18: If the user terminal has accepted a call back time option then the user's call is cleared via the PBX through the separate channels 40 pending call back.
S20: The call back time selected by the user is then stored in the memory 38 with the subscriber identity number of the user terminal in order to set the call back option.
S22: The call control server periodically determines whether the time has reached the call back time. If the timer has reached a call back time, then the next operator to become free is reserved, and connected to the user terminal identified by the subscriber line identity number stored with the call back time in the data store 38. Processing then proceeds to step S1.

### Call Credit Indicator

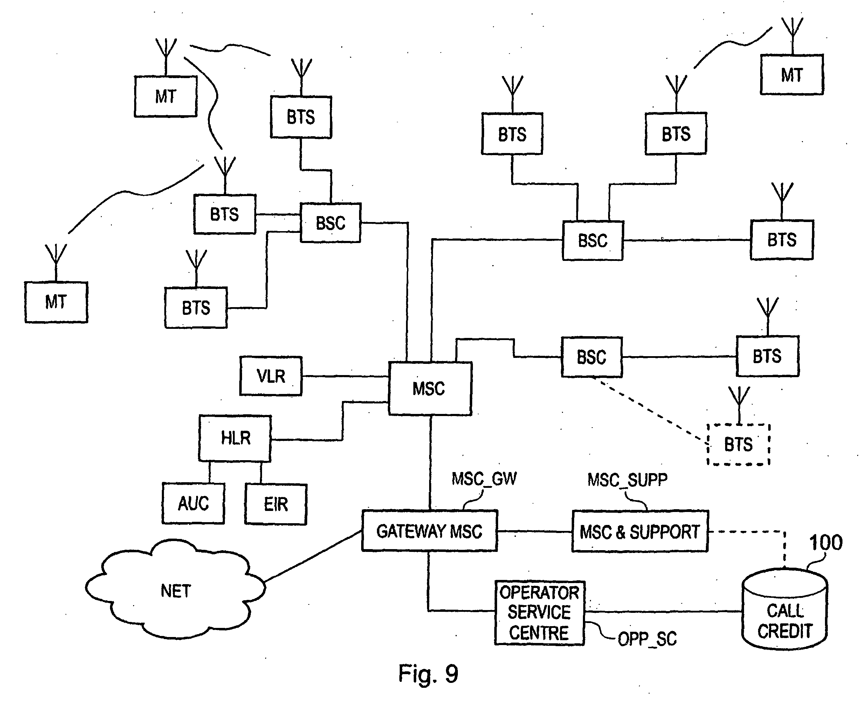

A further example technique for reducing a load on a call service centre, is illustrated in Figure 8. In Figure 8 a mobile terminal MT similar to the one shown in Figures 4, 5 and 6 is provided with a graphical representation of a remaining calling credit which is available to a user. As is known in the field of mobile telecommunications users generally may subscribe to either a monthly contract in accordance with predetermined tariffs or subscribe to a pre-purchase agreement in which a predetermined calling credit is purchased in advance. The calling credit is debited in accordance with calls made from the mobile terminal until the credit requires replenishing. Under the pre-purchase credit option a user cannot use a mobile terminal if there is insufficient credit available to make a call. Similarly, some monthly tariffs provide a predetermined calling credit, or a predetermined number of minutes for a particular calling tariff. After this number of minutes has been used, subsequent calls are charged, in addition to the monthly premium to the user. For this example, embodiments of the invention may provide a display, which indicates a number of minutes, which have been used for a particular tariff.

As illustrated in Figure 8, by an expanded graphic 50.4 appearing on the a graphical display 50' of the mobile terminal MT, a graphical representation of the calling credit in the form of a bar 60 is provided. Also displayed are messages to the user of the current duration of a call, which for the example shown in Figure 6 is "9 minutes and 39 seconds" on the first example display graphic 50.4.

For the example embodiment, the mobile terminal calculates a cost of the call from the duration of the call and the tariff for that call. In accordance with the cost of the call, the remaining calling credit is reduced and the bar 60 is reduced in size in accordance with the credit used. Therefore, as shown in the second representation of the graphic 50.5 appearing on the display of the mobile terminal, the bar 60 representing the credit has been reduced in accordance with the last call, which has now terminated. A message displayed on the display screen also states that the last call time was "10 minutes and 3 seconds". Accordingly, the user will know when and by how much the calling credit should be increased in order to make further calls. Alternatively, for monthly subscribing terminals, a number of minutes remaining, which may be included as part of the tariff may be displayed and correspondingly reduced in accordance with usage. By providing a representation of remaining credit as calling time or a monetary value, it will not be necessary for a user to call a call centre in order to ascertain remaining credit either via a text message or through a verbal confirmation from an operator.

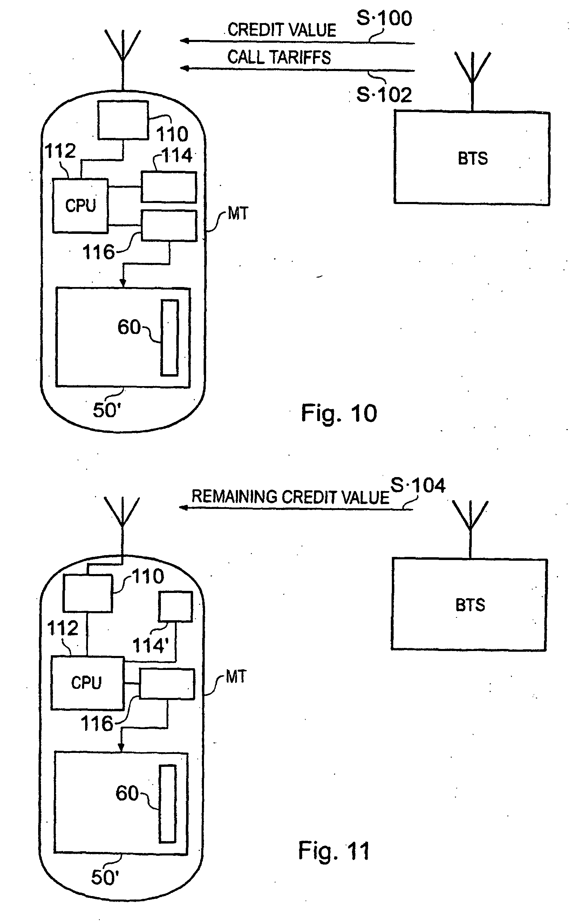

Figure 9 provides an illustration of an example arrangement through which calling credit is provided to the mobile terminal in order to display the calling credit to the user. Figure 9 illustrates the GSM network shown in Figure 1 but with a calling credit server 100 connected to the operator service centre OPP_SC. Optionally, the calling credit server 100 may form part of the mobile switching centre support unit MSC_SUPP or indeed may be located elsewhere in the network or attached to another network. The calling credit server 100 stores an available calling credit, which a user has previously pre-purchased or is provided as part of a monthly tariff. There are different implementations for providing the calling credit to the mobile terminal in accordance with embodiments of the present invention. Two examples are provided in Figures 10 and 11.

In Figure 10 a schematic representation of parts provided to implement the calling credit indicator embodying the present invention are shown within the mobile terminal MT. As shown in Figure 10 the mobile terminal MT includes a communications interface 110, a central processor unit 112 and an associated data store 114. Connected to the central processing unit 112 is a graphics display driver 116, which drives the graphical display 50'.

For one example embodiment, after a user has pre-purchased an amount of calling credit, this calling credit is stored within the calling credit server 100. As shown in Figure 10, as a schematic representation, the calling credit value is received from the network via the base station BTS using a first communication S 100. A second communication S102 provides calling tariffs associated with the calling credit. Both the credit value and the current calling tariffs are stored within the memory 114. Therefore, following a call made from the mobile terminal, the CPU 112 calculates the amount of calling credit which has been used in accordance with the duration of the call and the type of call being made. The calling tariffs may be determined in accordance with whether the call is a local call within the same area code or whether it is an international call. The calling tariffs may vary depending upon the operator, so that it will be appreciated that other calling tariffs are possible.

At the end of each call, the duration of the call is used with respect to the appropriate calling tariff to determine the amount of calling credit, which has been used. Correspondingly, the calling credit indicator 60 is adjusted in accordance with the calling credit used and data representing the remaining calling credit is stored in the memory 114. Contemporaneously with the calculation in the mobile terminal of the remaining calling credit, the calling credit server 100 uses information indicating the duration of the last call and the calling tariff to determine the remaining calling credit. Thus in operation warning messages may be communicated to a mobile terminal for the case where calling credit is running low or has expired. This may also be reflected by the calling credit indicator 60 shown in the display 50' of the mobile terminal MT.

An alternative arrangement embodying the present invention is shown in Figure 11. In Figure 11 the base station BTS communicates a remaining credit value S104 at the end of a call. Therefore, as explained above the calling credit server 100 determines an amount of remaining credit from the duration of the call in combination with the calling tariff for that call. Therefore, for the example shown in Figure 11 no calculation of remaining value is made within the mobile terminal. However, the remaining calling credit is communicated to the mobile terminal as part of a signalling message communicated after the termination of a call. The CPU 112 stores data representing the remaining calling credit value received from the network, in a memory 114'. The CPU 112 and the graphics display driver 116 operate to represent the remaining calling credit on the bar 60 of the display 50'.

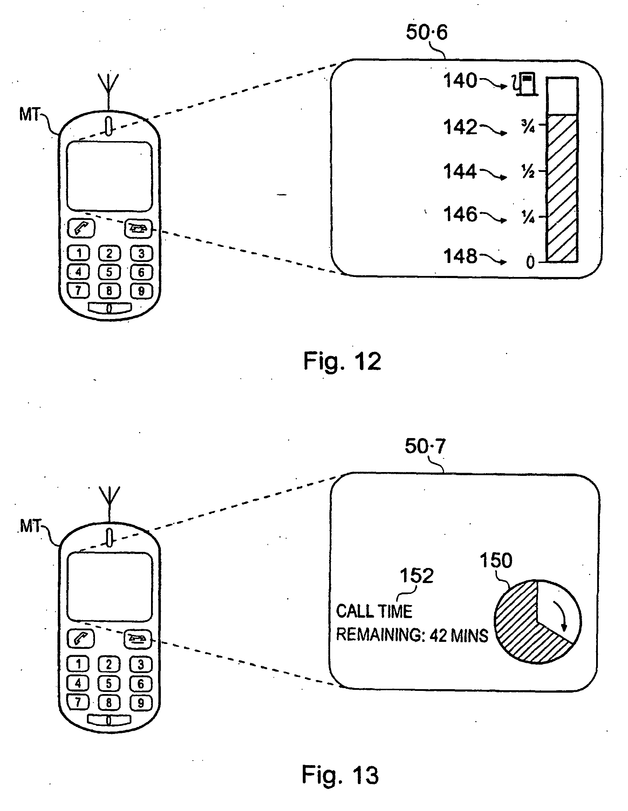

Further illustrations of techniques for displaying the amount of available calling credit to a user are provided in Figures 12 and 13. In Figure 12, an amount of available calling credit is provided in the form of a "fuel gauge" indicator in a graphical user display 50.6. Displaying an amount of calling credit as a fuel gauge showing "full tank" 140, "3/4 tank" 142, "1/2 tank" 144, "1/4 tank" 146 or "empty" 148 provides the user with a course indication of an available calling credit. As will be appreciated a "fuel gauge" is a representative example of generally displaying a course quantity, other examples being a battery level indicator. Providing a course indication of calling credit can be advantageous because an accuracy with which the amount of calling credit needs to be calculated can be substantially reduced. As such, for example, if the calling credit is calculated in the mobile terminal as for example illustrated in Figure 10, then the calling tariff information may only be updated periodically. As such an amount of calling credit available which has been calculated in the mobile terminal may be different to that which is actually available, as calculated in parallel in the network. Accordingly, by providing the user with a course indication of calling credit, the user is less likely to be disappointed if the calling credit actually available is less than that displayed as calculated by the mobile terminal.

An alternative technique for displaying calling credit is shown in Figure 13. In Figure 13 a graphical user display 50.7 is provided with a pie-chart indicator 150 showing a credit amount available. In addition, an actual amount of calling credit may be displayed as text 152.

### Outage Report from Network

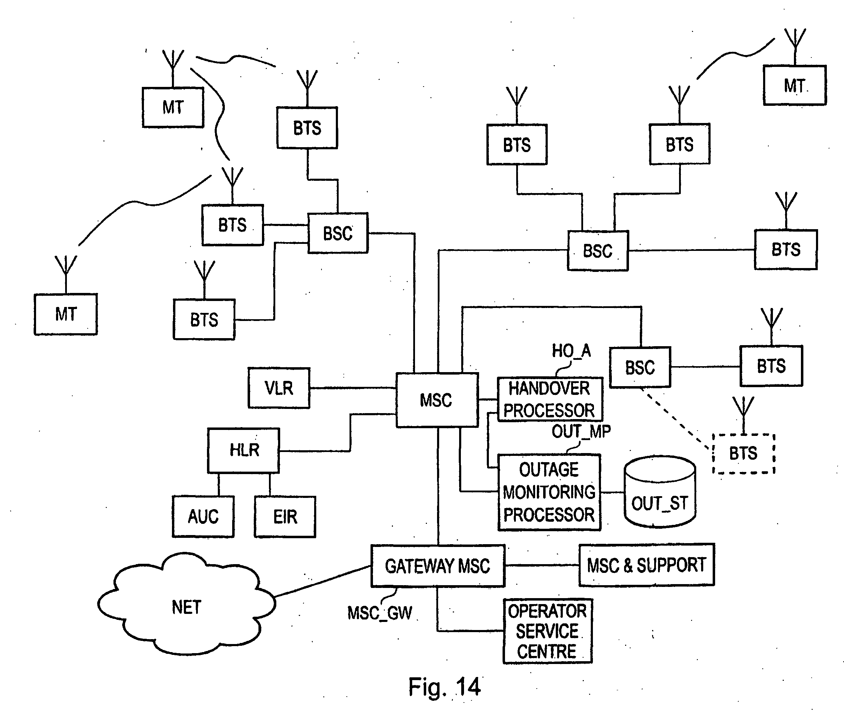

A further example embodiment, which provides a facility for reducing a load on a call centre or an operator centre, is illustrated in Figure 14. Figure 14 provides an illustrative diagram of the GSM network shown in Figure 1 but with an outage monitoring processor OUT_MP and an outage data store OUT_ST coupled to the mobile switching centre MSC in accordance with an embodiment of the invention. Also shown in Figure 14 is a hand-over processing apparatus HO_A, which may form part of the mobile switching centre MSC. The hand-over processing apparatus is responsible for controlling the affiliation of the mobile terminal with the base stations BTS of the mobile radio network as the mobile terminal moves throughout the network. The outage monitoring processor OUT_MP may also form part of the mobile switching centre or connected to the mobile switching centre MSC. Furthermore the outage monitoring processor OUT_MP is connected to the hand-over processing apparatus HO_A. The operation of the outage monitoring processor OUT_MP in combination with the outage data store and the hand-over processing apparatus will be explained in the following paragraphs.

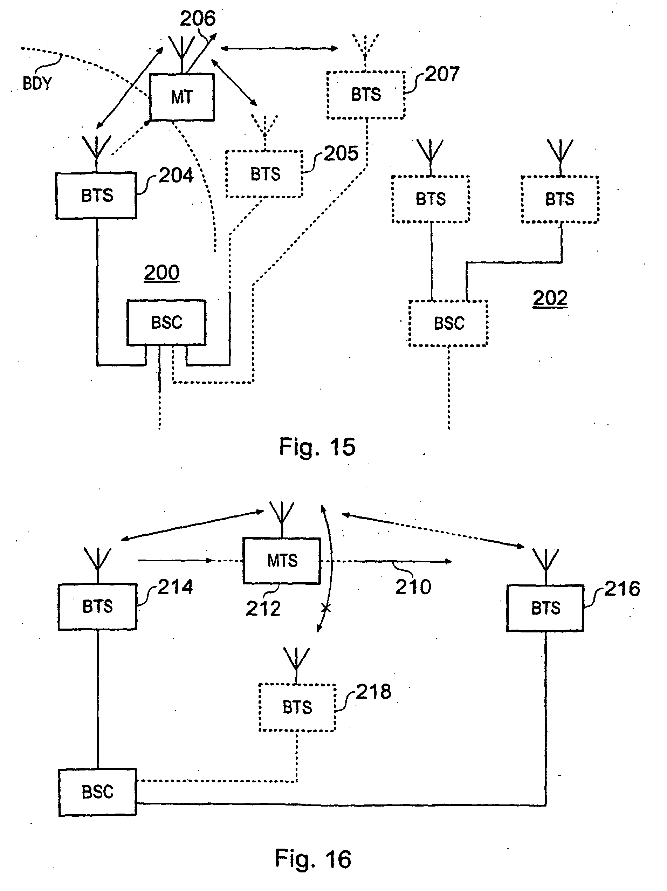

As all will be explained in the following paragraphs the outage monitoring processor OUT_MP is arranged to receive data indicating loss of services to mobile terminals in particular areas covered by the network. In response to the loss of service data the outage monitoring processor OUT_MP compares the area where the loss of service has occurred with outage information stored in the outage data store OUT_ST. The outage data store OUT_ST includes data indicating a reason for particular outage associated with the areas where outage is known. Therefore, in response to loss of service data the outage monitoring processor can generate a reporting message indicating the reason for a particular outage in a particular area. The reporting message may be communicated via the mobile radio network to the mobile terminal once communication with the mobile terminal is possible. The user is thereby automatically provided with a reason for the outage.
Example operations of the outage monitoring processor in accordance with embodiments of the present invention are illustrated in Figures 14, 15, 16 and 17. Figures 15 and 16 provide illustrative representations of how outage may be detected by a mobile terminal as a result of a loss of service.

Figure 15 provides an illustration of two base station sub-systems 200, 202. However the base station sub-system 202 has not yet been deployed and so is represented with a broken outline. The base station sub system 200 has been deployed. However two of the base stations 205, 207 are not yet in operation. Accordingly, a mobile terminal MT which is currently affiliated with a base station 204 is at a boundary BDY between an area where coverage is provided by the mobile radio network and an area where no coverage is provided. As illustrated by an arrow 206 the mobile terminal MT is currently moving away from the base station 204 with which it is currently affiliated. Therefore, in accordance with a conventional operation of the GSM system, the network would arrange for the mobile terminal MT to hand-over to another base station when predetermined conditions have been satisfied. The hand-over is controlled by the hand-over processing apparatus forming part of the mobile switching centre MSC. Typically, this involves measuring the received signal strength of a pilot channel or a broadcast signal, which for the example of the GSM standard is the BCCH channel. The BCCH channel is transmitted by each base station in the network. The BCCH includes a synchronisation burst having a Base Station Identity Code (BSIC). This code is used by the mobile terminal MT to identify the most appropriate base station with which to be affiliated. Accordingly, where, for example, the level of the down-link received signal strength or the bit error rate are below predetermined values, the mobile terminal should hand-over to another base station. However where there are no such base stations available then a call may be lost or at least a loss of service may occur. In response to a call being lost or where the pre-determined conditions have been reached but no hand-over is possible, loss of service data is generated within the network.

In one embodiment the loss of service data may be generated by the hand-over processing apparatus HO_A, or at least initiated by the hand-over processing apparatus. The loss of service data is communicated to the outage monitoring processor OUT_MP.

The loss of service data indicates that a loss of service to a mobile terminal has occurred and includes an identification of the base station with which the mobile terminal was affiliated when loss of service occurred. Thus, the loss of service provides a geographical indication of the area where service has been lost, from the identity of the base station.

Figure 16 provides a further example illustration of where loss of service may occur. An arrow 210 indicates a direction of motion of a mobile terminal 212. The mobile terminal 212 is travelling between cells serviced by base stations 214 and 216. The mobile terminal is affiliated with the first base station 214 and so communicates through this base station 214. As the mobile terminal MT moves towards the second base station 216 the signal with the first base station 214 becomes weaker and correspondingly the received signal strength becomes lower and/or the down-link bit error rate increases. A third base station 218 is positioned to service the mobile terminal as the mobile terminal moves away from the first base station 214. However, the third base station 218 is currently not available as a result of, for example a fault or a temporary outage due to servicing of that base station 218. Therefore, although the mobile terminal 212 would change affiliation by handing over to the third base station 218 this is not possible. As such, the mobile terminal must wait until the received signal strength of the BCCH broadcast by the second base station 216 reaches a level which can support communications via that base station 216. Therefore, as illustrated in Figure 12 although the mobile terminals should hand-over to the third base station 218 it cannot do so as a result of a temporary outage. Therefore, the mobile terminal remains affiliated to the first base station 214 even though the received signal strength and/or the down-link bit error rate for the BCCH for the first base station 214 has reduced to below a level which would otherwise cause a hand-over. Therefore, a call may be lost from this mobile terminal 212 as a result of the movement of the mobile terminal from the first to the second base stations 214, 216. As a result, loss of service data may be generated by the hand-over processing apparatus HO_A, because the hand-over conditions have been exceeded but no hand-over is possible.

Figure 16 provides an example where a call is lost or at least the quality of service is reduced as a result of a lack of availability of the third base station (outage) which would otherwise be available to serve the mobile terminal 212. The lack of availability of the third base station 218 causes the received signal strength of the BCCH of both the first and second base stations 214, 216 to be below a threshold which would otherwise trigger a hand-over. Again the area indicated by the BCCH to the mobile terminal provides geographical location of the loss of service.

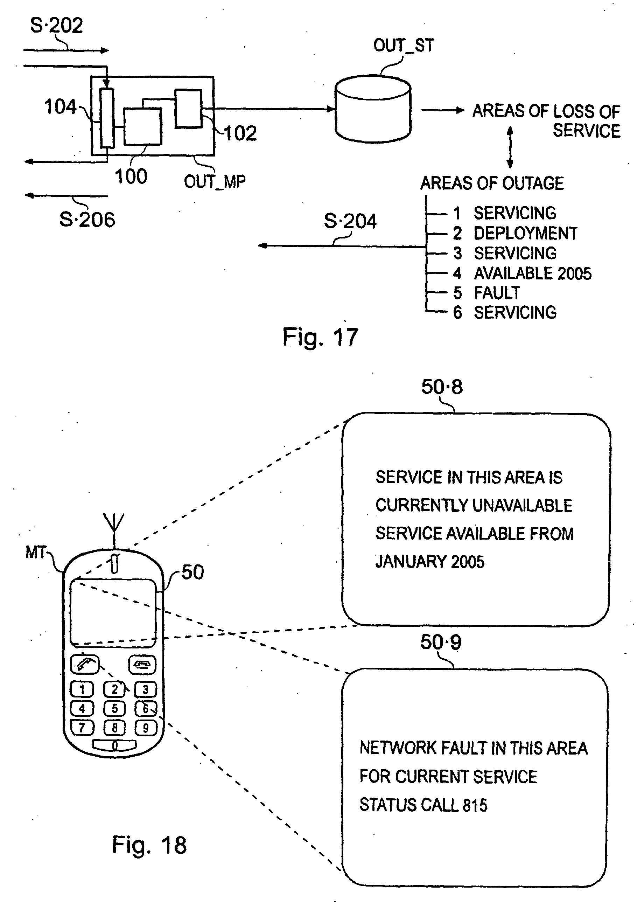

The operation of the outage monitoring processor OUT_MP is illustrated in Figure 17. Outage data representing known areas where mobile terminal users will experience temporary or persistent outage are stored within the outage store OUT_ST. The outage data provides an indication of the geographical location and the reason for the outage.

As shown in Figure 17, the outage monitoring processor comprises a data processing device 100 which is coupled to an interface 102 for sending and retrieving information to and from the outage data store OUT_ST. The outage monitoring processor also includes a communications interface 104 for receiving and sending data to the mobile switching centre MSC.

In Figure 17 a loss of service message S202 is received by the outage monitoring processor OUT_MP from the network. In response to a loss of service message, which includes an indication of the geographical location of the loss of service, the outage monitoring processor OUT_MP interrogates the outage store OUT_ST. The outage monitoring processor OUT_MP compares the area indicated within the loss of service data with a list of areas where outage is known. As illustrated in Figure 17 for example, the outage areas are numbered "1" through "6" although it will be appreciated that other codes or indications may be used to identify particular geographical areas. The outage data stored in the data store OUT_ST includes the areas of the outage and a corresponding reason for the outage. For example, the outage for area 1 is due to servicing, whereas the outage for area 2 is due to pending deployment of base stations to increase the radio coverage area. Indeed for area 4 a predicated availability for a service is given as "the year 2005". For area 5 a fault has been reported which has caused an outage.

The outage monitoring processor compares data representing the geographical area associated with the loss of service received via communicated message 202, with data representing known areas of outage stored in data store OUT_ST. As a result of the comparison the outage monitoring processor OUT_MP identifies the reason for outage, which has been pre-stored in the outage data store OUT_ST. Data representing the reason for the outage is thereby recovered from the store OUT_ST by the monitoring processor OUT_MP. The data indicating the reason for outage is formed into a message S204 by the outage monitoring processor OUT_MP and communicated back to the mobile terminal as a message 206.

Figure 18 provides an illustration of possible outage messages received from the network as a result of triggering a loss of service message. As shown in display graphic 50.8 the reason for an outage in one area is a current unavailability of the service. In addition, an indication that the service will be available from the year "2005" is provided to the user. A further example is given as a further illustration of an example text message displayed on the display screen 50.9. For this example, a network fault has occurred. Therefore in addition to the message indicating the reason for the outage, users are provided with a number to call (815) in order to ascertain information showing the current status of the investigation and remedial work to correct the fault. The status information may be provided as a text message or an audio communication, thereby obviating a requirement to call a call centre to ascertain this information.

According to the example embodiments of the invention users are provided automatically with a reason and associated information when a loss of service is experienced. As a result, there is no reason for users to call a call centre or operation service centre in order to enquire as to the reason for the loss of service. Furthermore, providing automatically a reason for a loss of service improves user satisfaction with the operator of a network. In some example embodiments an apology may be provided with the associated loss of service response message further improving customer relations.

Various further aspects and features of the present invention may be defined in the appended claims. Modifications may be made to the embodiments described without departing from the scope of the present invention. In particular, it will be appreciated that embodiments of the present invention find applications with any telecommunications network or indeed application generally to improving services provided from call centres or operator centres. It will be appreciated that the GSM network has been provided as an illustrative example only and that different communications network and standards may be used, such as 3G, CDMAone and CDMA2000 amongst others.

## Claims

1. A telecommunications system operable to provide outage information associated with a mobile network to mobile terminals (MT), the telecommunications system comprising
an outage monitoring processor (OUT_MP) operable to receive data indicative of a loss of service experienced by a mobile terminal (MT), the loss of service data including data indicative of a geographical area where the loss of service was experienced, and
an outage data store (OUT_ST) for storing data representing outage information indicating a geographical area where communication services may be degraded causing a loss of service to the mobile terminals (MT) and an explanation for the loss of service, wherein the monitoring processor (OUT_MP) is operable to compare the geographical area provided with the loss of service data experienced by the mobile terminal (MT) with the geographical area associated with outage information and from the comparison of the geographical areas, recover the data indicating the explanation for the loss of service from the data store and to communicate data representing the explanation to the mobile terminal (MT).

2. A telecommunications system as claimed in Claim 1, wherein the explanation for the loss of service includes an indication of a geographical area in which coverage is temporarily suspended.

3. A telecommunications system as claimed in Claim 1, wherein the explanation includes an indication of a geographical area in which the mobile network has not yet been deployed.

4. A telecommunications system as claimed in Claim 1, 2 or 3, wherein the geographical area is provided from an identity number of a base station with which the mobile terminal (MT) was affiliated when the loss of service occurred.

5. A telecommunications system as claimed in Claim 4, wherein the identity number is a Base Station Identity Code.

6. A telecommunications system as claimed in any preceding Claims, wherein the data representing the explanation for the loss of service is communicated to the mobile terminal using a text communication.

7. A processing apparatus for controlling affiliation of mobile terminals (MT) with base stations (BTS) in a mobile radio network, the apparatus comprising
a loss of service monitor operable to detect a loss of service experienced by a mobile terminal (MT), and
upon the loss of service being detected, to generate loss of service data including data identifying one of the base stations (BTS) with which the mobile terminal (MT) was affiliated when the loss of service was detected.

8. A processing apparatus as claimed in Claim 7, wherein the loss of service data is provided in response to a lost call to the mobile terminal(MT), the data indicative of the geographical area of the mobile terminal (MT) associated with the loss of service being provided from a base station (BTS) of the mobile network which was last to communicate with the mobile terminal (MT) before the call was dropped.

9. A processing apparatus as claimed in Claim 7, wherein the loss of service data is provided in response to a failed re-affiliation of the mobile terminal (MT) from one base station (BTS) to another, the data indicative of the geographical area associated with the loss of service being provided from one of the base stations associated with the failed re-affiliation.

10. A processing apparatus as claimed in Claim 9, wherein the loss of service data is provided as a result of the mobile network being unable to re-affiliate the mobile terminal (MT) with a base station although pre-determined conditions for re-affiliation have been satisfied, the geographical location of the loss of service being provided from the base station (BTS) with which the mobile terminal (MT) is affiliated when the pre-determined re-affiliation conditions where satisfied.

11. A processing apparatus as claimed in any of Claims 8, 9 or 10, wherein the geographical area is provided from an identity number of a base station with which the mobile terminal was affiliated when the loss of service occurred.

12. A processing apparatus as claimed in Claim 11, wherein the identity number is a Base Station Identity Code.

13. An outage monitoring processor (OUT_MP) for generating outage reports for mobile terminals (MT) providing outage information associate with a mobile radio network, the processor (OUT_MP) comprising
a communications interface (104) operable to receive data indicative of a loss of service experienced by a mobile terminal, the loss of service data including data indicative of a geographical area where the loss of service was experienced, and
an interface (102) to an outage data store (OUT_ST) for retrieving outage information from the outage data store (OUT_ST) indicating a geographical area where communication services may be degraded causing a loss of service to the mobile terminal (MT) and an explanation for the loss of service, and
a data processing apparatus (100) operable to compare the geographical area provided with the loss of service data experienced by the mobile terminal with the geographical area associated with outage information and from the comparison of the geographical areas, recover the data indicating the explanation for the loss of service from the data store (OUT_ST), and to communicate data representing the explanation to the mobile terminal (MT) via the communications interface (104).

14. An outage monitoring processor as claimed in Claim 13, wherein the explanation for the loss of service includes an indication of a geographical area in which coverage is temporarily suspended.

15. An outage monitoring processor as claimed in Claim 13, wherein the explanation includes an indication of a geographical area in which the mobile network has not yet been deployed.

16. An outage monitoring processor as claimed in Claim 13, 14 or 15, wherein the geographical area is provided from an identity number of a base station with which the mobile terminal was affiliated when the loss of service occurred.

17. An outage monitoring processor as claimed in Claim 16, wherein the identity number is a Base Station Identity Code.

18. An outage monitoring processor as claimed in any of Claims 13 to 17, wherein the data representing the explanation for the loss of service is communicated to the mobile terminal using a text communication.

19. A method for providing outage information for a mobile network to mobile terminals, the method comprising
storing data representing outage information indicating a geographical area where communication services may be degraded causing a loss of service to a mobile terminal and an explanation for the loss of service,
receiving data indicative of a loss of service experienced by a mobile terminal, the loss of service data including data indicative of a geographical area associated with the loss of service, and
comparing the data representing the geographical area provided with the loss of service data experienced by the mobile terminal with the geographical area associated with outage information,
from the comparison of the geographical areas recovering the data indicating the explanation for the loss of service from the data store, and
communicating data representing the explanation to the mobile terminal.

20. A method according to Claim 19, comprising
generating the loss of service data from an association of an affiliation of mobile terminals with base stations in the mobile radio network,
detecting a loss of service experienced by a mobile terminal (MT), and
upon the loss of service being detected, generating the loss of service data including data identifying one of the base stations with which the mobile terminal was affiliated when the loss of service was detected.

21. A method as claimed in Claim 20, wherein the loss of service is detected in response to a lost call to the mobile terminal, the generating the loss of service data including providing data identifying a base station of the mobile network which was last to communicate with the mobile terminal before the call was dropped.

22. A method as claimed in Claim 20, wherein the loss of service is detected in response to a failed re-affiliation of the mobile terminal from one base station to another, the generating the loss of service data including providing data indicative of the geographical area of the mobile terminal associated with the loss of service from one of the base stations associated with the failed re-affiliation.

23. A method as claimed in Claim 22, wherein the loss of service is detected in response to the mobile network being unable to re-affiliate the mobile terminal with a base station although pre-determined conditions for re-affiliation have been satisfied, the generating the loss of service data including providing the geographical location of the loss of service from the base station with which the mobile terminal is affiliated when the pre-determined reaffiliation conditions where satisfied.

24. A computer program which when loaded onto a computer causes the computer to perform the method according to any of Claims 19 to 23.

25. A computer program product comprising a computer readable medium, having thereon computer program code means, which when loaded onto a computer causes the computer to perform the method according to any of claims 19 to 23.

26. A signal representing a computer program which when loaded onto a computer causes the computer to perform the method according to any of claims 19 to 23.

## Patentansprüche

1. Telekommunikationssystem, das betreibbar ist, um Ausfall- bzw. Unterbrechungsinformation, die mit einem Mobilfunknetz verknüpft ist, mobilen Terminals (MT) bereitzustellen, wobei das Telekommunikationssystem aufweist
einen Ausfallüberwachungsprozessor (OUT_MP), der betreibbar ist, um Daten zu empfangen, die einen Dienstausfall anzeigen, den ein mobiles Terminal (MT) erfährt, wobei die Dienstausfalldaten Daten einschließen, die ein geographisches Gebiet anzeigen, wo der Dienstausfall aufgetreten ist, und
einen Ausfalldatenspeicher (OUT_ST) für das Speichern von Daten, die die Ausfallinformation, die ein geographisches Gebiet anzeigen, wo Kommunikationsdienste sich verschlechtern können, was einen Dienstausfall zu den mobilen Terminals (MT) verursacht und eine Erklärung für den Dienstausfall darstellen, wobei der Überwachungsprozessor (OUT_MP) betreibbar ist, um das geographische Gebiet, das mit den Daten des Dienstausfalls, dem das mobile Terminal (MT) unterlag, bereitgestellt wird, mit dem geographischen Gebiet, das mit der Ausfallinformation verknüpft ist, zu vergleichen und aus dem Vergleich der geographischen Gebiete die Daten, die die Erklärung für den Dienstverlust anzeigen, aus dem Datenspeicher einzuholen und um die Daten, die die Erklärung darstellen, dem mobilen Terminal (MT), zu kommunizieren.

2. Telekommunikationssystem nach Anspruch 1, wobei die Erklärung für den Dienstausfall eine Anzeige eines geographischen Gebiets, in dem die Abdeckung zeitweilig unterbrochen ist, beinhaltet.

3. Telekommunikationssystem nach Anspruch 1, bei dem die Erklärung eine Anzeige eines geographischen Gebiets beinhaltet, in dem das Mobilfunknetzwerk noch nicht eingesetzt ist.

4. Telekommunikationssystem nach Anspruch 1, 2 oder 3, wobei das geographische Gebiet aus einer Identitätsnummer einer Basisstation bereitgestellt wird, mit der das mobile Terminal (MT) verbunden war, als der Dienstverlust auftrat.

5. Telekommunikationssystem nach Anspruch 4, wobei die Identifikationszahl ein Basisstationsidentitätscode ist.

6. Tetekommunikationssystem nach einem der vorherigen Ansprüche, wobei die Daten, die die Erklärung für den Dienstverlust darstellen, zu dem mobilen Terminal unter Verwendung einer Textkommunikation kommuniziert werden.

7. Verarbeitungseinrichtung für das Steuern der Verbindung von mobilen Terminals (MT) mit Basisstationen (BTS) in einem Mobilfunknetzwerk, wobei die Einrichtung aufweist
eine Dienstausfallregistriereinrichtung, die betreibbar ist, um einen Dienstausfall, den ein mobiles Terminal (MT) erfährt, zu erfassen,
wobei mit der Erfassung des Dienstausfalls Dienstausfalldaten einschließlich Daten, die eine der Basisstationen (BTS), mit dem das mobile Terminal (MT) verbunden war, wenn der Dienstausfall erfaßt wurde, identifizieren, erzeugt werden.

8. Verarbeitungseinrichtung nach Anspruch 7, bei der die Dienstausfalldaten bereitgestellt werden in Antwort auf einen nicht zustandegekommenen Anruf zu dem mobilen Terminal (MT), wobei die Daten das geographische Gebiet des mobilen Terminals (MT), das mit dem Dienstausfall verknüpft ist, der von einer Basisstation (BTS) des Mobilfunknetzwerks bereitgestellt wird, welches als letztes mit dem mobilen Terminal (MT) verbunden war, bevor der Anruf unterbrochen wurde, anzeigt.

9. Verarbeitungseinrichtung nach Anspruch 7, bei der die Dienstausfalldaten bereitgestellt werden in Antwort auf eine gescheiterte Wieder- bzw. Weiterverbindung des mobilen Terminals (MT) von einer Basisstation (BTS) zu einer anderen, wobei die Daten, die das geographische Gebiet anzeigen, das mit dem Dienstausfall verknüpft ist, von einer der Basisstationen bereitgestellt werden, die mit der fehlgeschlagenen Neuverbindung verknüpft ist.

10. Verarbeitungseinrichtung nach Anspruch 9, bei der die Dienstausfalldaten bereitgestellt werden als Resultat, daß ein Mobilfunknetzwerk nicht in der Lage ist, das mobile Terminal (MT) mit einer Basisstation erneut zu verbinden, obgleich vorbestimmte Bedingungen für die erneute Verbindung erfüllt sind, wobei der geographische Ort des Dienstausfalls von der Basisstation (BTS), mit der das mobile Terminal (MT) verbunden ist, als die vorbestimmten Wiederverbindungsbedingungen erfüllt waren, bereitgestellt wird.

11. Verarbeitungsvorrichtung nach einem der Ansprüche 8, 9 oder 10, wobei das geographische Gebiet bereitgestellt wird durch eine Identifikationsnummer einer Basisstation, mit der das mobile Terminal verbunden war, als der Dienstausfall auftrat.

12. Verarbeitungseinrichtung nach Anspruch 11, wobei die Identifikationsnummer ein Basisstationsidentifikationscode ist.

13. Ausfallüberwachungsprozessor (OUT_MP) für das Erzeugen von Ausfallberichten für mobile Terminals (MT), die Ausfallinformation bereitstellen, die mit einem Mobilfunknetzwerk verknüpft sind, wobei der Prozessor (OUT_MP) aufweist
eine Kommunikationsschnittstelle (104), die betreibbar ist, so daß sie Daten empfängt, die einen Dienstausfall anzeigen, den ein mobiles Terminal bzw. ein tragbares Endgerät erfahren hat, wobei die Dienstausfalldaten Daten beinhalten, die das geographische Gebiet anzeigen, wo der Dienstausfall aufgetreten ist, und
eine Schnittstelle (102) zu einem Ausfalldatenspeicher (OUT_ST) für das Abrufen von Ausfallinformation von dem Ausfalldatenspeicher (OUT_ST), die ein geographisches Gebiet anzeigen, wo die Kommunikationsdienste schlechter sein können, was einen Dienstausfall am mobilen Terminal (MT) verursacht, und die eine Erklärung für den Dienstausfall anzeigt, und
eine Datenverarbeitungseinrichtung (100), die betreibbar ist, um das geographische Gebiet, das mit den Daten des Dienstausfalls, den das mobile Terminal erfahren hat, bereitgestellt wird, mit dem geographischen Gebiet, das mit der Ausfallinformation verknüpft ist, zu vergleichen, und aus dem Vergleich der geographischen Gebiete Daten aus dem Datenspeicher (OUT_ST) zu holen, die die Erklärung für den Dienstausfall anzeigen, und um die Daten, die die Erklärung darstellen, dem mobilen Terminal (MT) über die Kommunikationsschnittstelle (104) zu übermitteln.

14. Ausfallüberwachungsprozessor nach Anspruch 13, bei dem die Erklärung für den Dienstausfall eine Anzeige eines geographischen Gebiets beinhaltet, in der der Funkversorgungsbereich zeitweilig unterbrochen ist.

15. Ausfallüberwachungsprozessor nach Anspruch 13, wobei die Erklärung eine Anzeige eines geographischen Gebiets beinhaltet, in dem das Mobilfunknetz noch nicht eingesetzt wird.

16. Ausfallüberwachungsprozessor nach Anspruch 13, 14 oder 15, bei dem das geographische Gebiet bereitgestellt wird aus einer Identifikationsnummer einer Basisstation, mit der das mobile Terminal verbunden war, als der Dienstausfall auftrat.

17. Ausfallüberwachungsprozessor nach Anspruch 16, wobei die Identifikationsnummer ein Basisstationsidentifikationscode ist.

18. Ausfallüberwachungsprozessor nach einem der Ansprüche 13 bis 17, bei dem die Daten, die die Erklärung für den Dienstausfall darstellen, zu dem mobilen Terminal übermittelt werden unter Verwendung einer Textkommunikation.

19. Verfahren für das Bereitstellen einer Ausfallinformation für ein Mobilfunknetzwerk zu mobilen Terminals, wobei das Verfahren aufweist
Speichern von Daten, die die Ausfallinformation darstellen, die ein geographisches Gebiet anzeigen, wo die Kommunikationsdienste verschlechtert sein können, was einen Dienstausfall an einem mobilen Terminal verursacht, und die eine Erklärung für den Dienstausfall anzeigt,
Empfangen von Daten, die einen Dienstausfall, den ein mobiles Terminal erfahren hat, anzeigen, wobei die Dienstausfalldaten Daten beinhalten, die ein geographisches Gebiet anzeigen, das mit dem Dienstausfall verknüpft ist, und
Vergleichen der Daten, die das geographische Gebiet darstellen, das mit den Daten eines Dienstausfalls, den ein mobiles Terminal erfahren hat, bereitgestellt wird, mit dem geographischen Gebiet, das mit der Ausfallinformation verknüpft ist,
Gewinnen der Daten von dem Datenspeicher, die die Erklärung für den Dienstausfall anzeigen, aus dem Vergleich der geographischen Gebiete und
Kommunizieren von Daten zu dem mobilen Terminal, die die Erklärung darstellen.

20. Verfahren nach Anspruch 19, das aufweist
Erzeugen der Dienstausfalldaten aus einer Verknüpfung einer Verbindung der mobilen Terminals mit Basisstationen in dem Mobilfunknetz,
Erfassen eines Dienstausfalls, dem ein mobiles Terminal (MT) unterliegt, und
mit Erfassen eines Dienstausfalls Erzeugen der Dienstausfalldaten einschließlich Daten, die eine der Basisstationen identifiziert, mit der das mobile Terminal verbunden war, als der Dienstausfall erfaßt wurde.

21. Verfahren nach Anspruch 20, bei dem der Dienstausfall erfaßt wird in Antwort auf einen fehlgeschlagenen Anruf zu dem mobilen Terminal, wobei das Erzeugen der Dienstausfalldaten das Bereitstellen von Daten beinhaltet, die eine Basisstation des Mobilfunknetzwerks identifizieren, welche die letzte war, die mit dem mobilen Terminal in Verbindung stand, bevor der Anruf unterbrochen wurde.

22. Verfahren nach Anspruch 20, wobei der Dienstausfall erfaßt wird in Antwort auf eine gescheiterte Wiederverbindung des mobilen Terminals von einer Basisstation zu einer anderen, wobei das Erzeugen der Dienstausfalldaten das Bereitstellen von Daten, die das geographische Gebiet des mobilen Terminals, welches mit dem Dienstausfall verknüpft sind, durch eine der Basisstationen, die mit der gescheiterten Wiederverbindung verknüpft ist, beinhaltet.

23. Verfahren nach Anspruch 22, bei dem der Dienstausfall erfaßt wird in Antwort auf ein Mobilfunknetzwerk, das nicht in der Lage ist, das mobile Terminal mit einer Basisstation wiederzuverbinden, obgleich vorbestimmte Bedingungen für die Wiederverbindung erfüllt sind, wobei das Erzeugen der Dienstausfalldaten das Bereitstellen des geographischen Ortes des Dienstausfalls von der Basisstation, mit der das mobile Terminal verbunden ist, wenn die vorbestimmten Wiederverbindungsbedingungen erfüllt wurden, beinhaltet.

24. Computerprogramm, das, wenn es in einen Computer geladen wird, veranlaßt, daß der Computer das Verfahren nach einem der Ansprüche 19 bis 23 durchführt.

25. Computerprogrammprodukt, das ein computerlesbares Medium aufweist mit Computerprogrammcodemitteln hierauf, die, wenn sie in den Computer geladen werden, veranlassen, daß der Computer das Verfahren nach einem der Ansprüche 19 bis 23 durchführt.

26. Signal, das ein Computerprogramm darstellt, welches, wenn es in einen Computer geladen wird, veranlaßt, daß der Computer das Verfahren nach einem der Ansprüche 19 bis 23 durchführt.

## Revendications

1. Système de télécommunications utilisable pour fournir, à des terminaux mobiles (MT), de l'information d'interruption associée à un réseau mobile, le système de télécommunications comprenant :
un processeur (OUT_MP) de surveillance d'interruption utilisable pour recevoir des données représentatives d'une perte de service subie par un terminal mobile (MT), les données de perte de service incluant des données représentatives d'une zone géographique où la perte de service a été subie ; et
une mémoire (OUT_ST) de données d'interruption destinée à mémoriser des données représentant de l'information d'interruption indiquant une zone géographique où des services de télécommunications peuvent être dégradés en provoquant une perte de service pour les terminaux mobiles (MT) et une explication pour la perte de service, dans lequel le processeur (OUT_MP) de surveillance est utilisable pour comparer la zone géographique fournie avec les données de perte de service subie par le terminal mobile (MT) à la zone géographique associée à l'information d'interruption et pour, à partir de la comparaison des zones géographiques, récupérer, dans la mémoire de données, les données indiquant l'explication pour la perte de service et pour communiquer, au terminal mobile (MT), les données représentant l'explication.

2. Système de télécommunications tel que revendiqué dans la revendication 1, dans lequel l'explication pour la perte de service comprend l'indication d'une zone géographique dans laquelle la couverture est temporairement suspendue.

3. Système de télécommunications tel que revendiqué dans la revendication 1, dans lequel l'explication comprend l'indication d'une zone géographique dans laquelle le réseau mobile n'a pas encore été déployé.

4. Système de télécommunications tel que revendiqué dans la revendication 1, 2 ou 3, dans lequel la zone géographique est fournie à partir d'un numéro d'identité d'une station de base à laquelle le terminal mobile (MT) était affilié lorsque la perte de service s'est produite.

5. Système de télécommunications tel que revendiqué dans la revendication 4, dans lequel le numéro d'identité est un code d'identité de station de base.

6. Système de télécommunications tel que revendiqué dans l'une quelconque des revendications précédentes, dans lequel les données représentant l'explication pour la perte de service sont communiquées au terminal mobile en utilisant une communication de texte.

7. Dispositif de traitement destiné à commander l'affiliation de terminaux mobiles (MT) à des stations de base (BTS) dans un réseau radio mobile, le dispositif comprenant :
un surveillant de perte de service utilisable pour détecter une perte de service subie par un terminal mobile (MT) ; et
lors de la détection d'une perte de service, pour engendrer des données de perte de service incluant des données identifiant l'une des stations de base (BTS) à laquelle le terminal mobile (MT) était affilié lorsque la perte de service a été détectée.

8. Dispositif de traitement tel que revendiqué dans la revendication 7, dans lequel les données de perte de service sont fournies en réponse à un appel perdu vers le terminal mobile (MT), les données représentatives de la zone géographique du terminal mobile (MT) associée à la perte de service étant fournies à partir de la station de base (BTS) du réseau mobile qui a été la dernière à communiquer avec le terminal mobile (MT) avant que l'appel échoue.

9. Dispositif de traitement tel que revendiqué dans la revendication 7, dans lequel les données de perte de service sont fournies en réponse à une réaffiliation ayant échoué du terminal mobile (MT) d'une station de base (BTS) à une autre, les données représentatives de la zone géographique associée à la perte de service étant fournies par l'une des stations de base associées à la réaffiliation qui a échoué.

10. Dispositif de traitement tel que revendiqué dans la revendication 9, dans lequel les données de perte de service sont fournies comme résultat du fait que le réseau mobile est incapable de réaffilier le terminal mobile (MT) à une station de base bien que des conditions prédéterminées pour la réaffiliation aient été satisfaites, la localisation géographique de la perte de service étant fournie à partir de la station de base (BTS) à laquelle le terminal mobile (MT) était affilié lorsque les conditions prédéterminées de réaffiliation étaient satisfaites.

11. Dispositif de traitement tel que revendiqué dans l'une quelconque des revendications 8, 9 ou 10, dans lequel la zone géographique est fournie à partir d'un numéro d'identité d'une station de base à laquelle le terminal mobile était affilié lorsque la perte de service s'est produite.

12. Dispositif de traitement tel que revendiqué dans la revendication 11, dans lequel le numéro d'identité est un code d'identité de station de base.

13. Processeur (OUT_MP) de surveillance d'interruption destiné à engendrer des rapports d'interruption pour des terminaux mobiles (MT) fournissant de l'information d'interruption associée à un réseau radio mobile, le processeur (OUT_MP) comprenant :
une interface (104) de télécommunications utilisable pour recevoir des données représentatives d'une perte de service subie par un terminal mobile, les données de perte de service incluant des données représentatives d'une zone géographique où la perte de service a été subie ; et
une interface (102) vers une mémoire (OUT_ST) de données d'interruption destinée à récupérer de l'information d'interruption dans la mémoire (OUT_ST) de données d'interruption indiquant, au terminal mobile (MT), une zone géographique dans laquelle des services de télécommunications peuvent être dégradés en provoquant une perte de service et une explication pour la perte de service ; et
un dispositif (100) de traitement de données utilisable pour comparer la zone géographique fournie avec les données de perte de service subie par le terminal mobile à la zone géographique associée à l'information d'interruption et pour, à partir de la comparaison des zones géographiques, récupérer, dans la mémoire (OUT_ST) de données, les données indiquant l'explication pour la perte de service et pour communiquer, au terminal mobile (MT), via l'interface (104) de télécommunications, les données représentant l'explication.

14. Processeur de surveillance d'interruption tel que revendiqué dans la revendication 13, dans lequel l'explication pour la perte de service comprend l'indication d'une zone géographique dans laquelle la couverture est temporairement suspendue.

15. Processeur de surveillance d'interruption tel que revendiqué dans la revendication 13, dans lequel l'explication comprend l'indication d'une zone géographique dans laquelle le réseau mobile n'a pas encore été déployé.

16. Processeur de surveillance d'interruption tel que revendiqué dans la revendication 13, 14 ou 15, dans lequel la zone géographique est fournie à partir d'un numéro d'identité d'une station de base à laquelle le terminal mobile était affilié lorsque la perte de service s'est produite.

17. Processeur de surveillance d'interruption tel que revendiqué dans la revendication 16, dans lequel le numéro d'identité est un code d'identité de station de base.

18. Processeur de surveillance d'interruption tel que revendiqué dans l'une quelconque des revendications 13 à 17, dans lequel les données représentant l'explication pour la perte de service sont communiquées au terminal mobile en utilisant une communication de texte.

19. Procédé de fourniture, à des terminaux mobiles, d'information d'interruption pour un réseau mobile, le procédé comprenant :
la mémorisation de données représentant de l'information d'interruption indiquant, à un terminal mobile, une zone géographique dans laquelle des services de télécommunications peuvent être dégradés en provoquant une perte de service, et une explication pour la perte de service ;
la réception de données représentatives d'une perte de service subie par un terminal mobile, les données de perte de service incluant des données représentatives d'une zone géographique associée à la perte de service ; et
la comparaison des données représentant la zone géographique fournies avec les données de perte de service subie par le terminal mobile à la zone géographique associée à l'information d'interruption ;
à partir de la comparaison des zones géographiques, la récupération, à partir de la mémoire de données, des données indiquant l'explication pour la perte de service ; et
la communication, au terminal mobile, de données représentant l'explication.

20. Procédé selon la revendication 19, comprenant :
la production des données de perte de service à partir d'une association d'une affiliation des terminaux mobiles à des stations de base dans le réseau radio mobile ;
la détection d'une perte de service subie par un terminal mobile (MT) ; et
au moment où la perte de service est détectée, la production des données de perte de service incluant des données identifiant l'une des stations de base à laquelle le terminal mobile était affilié lorsque la perte de service a été détectée.

21. Procédé tel que revendiqué dans la revendication 20, dans lequel la perte de service est détectée en réponse à un appel perdu vers le terminal mobile, la production des données de perte de service incluant la fourniture de données identifiant une station de base du réseau mobile qui a été la dernière à communiquer avec le terminal mobile avant que l'appel échoue.

22. Procédé tel que revendiqué dans la revendication 20, dans lequel la perte de service est détectée en réponse à une réaffiliation ayant échoué du terminal mobile d'une station de base à une autre, la production de données de perte de service incluant la fourniture, par l'une des stations de base associées à la réaffiliation qui a échoué, de données représentatives de la zone géographique du terminal mobile associée à la perte de service.

23. Procédé tel que revendiqué dans la revendication 22, dans lequel la perte de service est détectée en réponse au fait que le réseau mobile est incapable de réaffilier le terminal mobile à une station de base bien que des conditions prédéterminées pour la réaffiliation aient été satisfaites, la production des données de perte de service incluant la fourniture de la localisation géographique de la perte de service par la station de base à laquelle le terminal mobile était affilié lorsque les conditions prédéterminées de réaffiliation étaient satisfaites.

24. Programme d'ordinateur qui, lorsqu'il est chargé dans un ordinateur, fait que l'ordinateur met en oeuvre le procédé selon l'une quelconque des revendications 19 à 23.

25. Produit programme d'ordinateur comprenant un support lisible en ordinateur, portant un moyen formant code de programme d'ordinateur qui, lorsqu'il est chargé dans un ordinateur, fait que l'ordinateur met en oeuvre le procédé selon l'une quelconque des revendications 19 à 23.

26. Signal représentant un programme d'ordinateur qui, lorsqu'il est chargé dans un ordinateur, fait que l'ordinateur met en oeuvre le procédé selon l'une quelconque des revendications 19 à 23.
